# EUROPEAN PATENT SPECIFICATION

(11) **EP 4 204 800 B1**
(45) Date of publication and mention of the grant of the patent: **02.07.2025**
(21) Application number: 21758663.5
(22) Date of filing: 09.08.2021
(51) Int. Cl.: G01N 30/80

(54) **NOZZLE ASSEMBLY FOR A FRACTION COLLECTION UNIT**
DÜSENANORDNUNG FÜR EINE FRAKTIONSSAMMELEINHEIT
ENSEMBLE BUSE DESTINÉ À UNE UNITÉ DE COLLECTE DE FRACTIONS

(30) Priority: 28.08.2020 GB 202013552
(43) Date of publication of application: 05.07.2023
(60) Divisional application: 25167481.8
(73) Proprietor: Cytiva Sweden AB, 751 84 Uppsala (SE)
(72) Inventor: BJERNULF, Olle, 751 84 Uppsala (SE); AGREN, Tomas Yngve, 751 84 Uppsala (SE)
(74) Representative: Wu, Ping
(86) International application number: PCT/EP2021/072190
(87) International publication number: WO 2022/043043

(56) References cited:
- US-A- 5 213 683
- US-A- 5 525 303
- US-A1- 2015 338 000
- US-A1- 2018 100 837
- US-B1- 6 494 500

## Description

### TECHNICAL FIELD

The present invention relates to a nozzle assembly for a fraction collection unit configured to collect one or more fluid samples.

### BACKGROUND

Bioprocessing systems are widely used, e.g. to perform chemical separation. An example of a bioprocessing system is a chromatography system. Chromatography is a well-known procedure for analyzing and preparing chemical mixtures or chemical samples. The sample may typically be dissolved in a fluid, referred to as the mobile phase. The various sample components or samples of the mixture travel at different speeds, causing them to separate. In preparative chromatography the separation may be used to separate the sample components in a fractionation step where the mobile phase may be directed to different containers by a fraction collection unit.

The fraction collection unit will typically be controlled to divert flow of samples to different containers dependent on the output of a sensor/detector, e.g. an ultraviolet light absorbance detector.

The minimum volume of a sample that can be discriminated and/or diverted to a container is a fluid drop. The volume of such a drop depends on an outer diameter of a drop former or nozzle.

A problem with conventional solutions is that at low flow rates and/or narrow detector peaks (i.e. where a desired sample is only delivered for a brief moment in time) a very narrow tubing end is required, typically the tubing must be < 0.5 millimeters. For this dimension, the only readily available tubing is fused silica. This conventional drop former or nozzle has many disadvantages. It is difficult to handle as it is very fragile. Further, special cutting tools are required to adapt the fused silica tubing to a suitable length. Further, fused silica tubing has a relatively high price.

Thus, there is a need for an improved drop former or nozzle for a fraction collection unit.

### OBJECTS OF THE INVENTION

An objective of embodiments of the present invention is to provide a solution which mitigates or solves the drawbacks and problems described above.

### SUMMARY OF THE INVENTION

The above and further objectives are achieved by the subject matter described herein. Further advantageous implementation forms of the invention are further defined herein. According to the invention the objects of the invention is addressed by a nozzle assembly for a fraction collection unit configured to collect one or more fluid samples, said nozzle assembly comprising a conduit adapter configured to fluidly couple to a conduit and a nozzle body, wherein the nozzle body comprises at least a nozzle part configured to release drops of the one or more collected fluid samples at a tip of the nozzle part, and an interface part configured to mechanically couple the assembly to the fraction collection unit, wherein the assembly, when the conduit adapter is attached to the nozzle body, forms a fluid channel from an inlet of the conduit adapter to the tip of the nozzle part.

In one embodiment of the invention, an outer diameter of the tip of the nozzle part is in the range of 0.2-2 millimeters in diameter and more preferably in the range of 0.3-0.5 millimeters in diameter.

In one embodiment of the invention, the inner diameter of the tip of the nozzle part is preferably in the range of 0.1-1 millimeters in diameter and more preferably in the range of 0.2-0.4 millimeters in diameter.

In one embodiment of the invention the nozzle part comprises a cylindrical part and a conical part comprising the tip of the nozzle part.

In one embodiment of the invention, the interface part further comprises a gripping element configured to provide a secure grip for a user handling the nozzle assembly.

In one embodiment of the invention, the nozzle body and conduit adapter comprise attachment elements that are used to releasably attach the nozzle body to the conduit adapter.

In one embodiment of the invention, the nozzle assembly is made from plastic.

In one embodiment of the invention, the interface part further comprises a locking element configured to lock the nozzle assembly to the fraction collection unit.

In one embodiment of the invention, the interface part further comprises a collector interface part configured to be received by a recess of the fraction collection unit, wherein the locking element is provided at one end of the collector interface part which is arranged adjacent to the nozzle part.

In one embodiment of the invention, the locking element is formed like a flap extending from the collector interface part in a direction parallel to a centerline of the nozzle body, wherein the flap is provided with a locking lip at an end of the lip arranged furthest away from the collector interface part.

An advantage is that improved handling of the nozzle is provided as installation of tubing and nozzle can be made in two or more steps. A further advantage is that generic cutting tools can be used to adapt standard tubing to a suitable length. A further advantage is that cheap and easily available tubing can be used to fluidly couple the fraction collection unit to a sample source, such as a chromatography system.

Further applications and advantages of embodiments of the invention will be apparent from the following detailed description.

### BRIEF DESCRIPTION OF THE DRAWINGS

Fig. 1 shows an exemplary application of a fraction collection unit according to one or more embodiments of the present disclosure.
Fig. 2 shows conduit adapter of a nozzle assembly according to one or more embodiments of the present disclosure.
Fig. 3 shows a nozzle body of a nozzle assembly according to one or more embodiments of the present disclosure.
Fig. 4 shows the nozzle assembly when the conduit adapter is attached to the nozzle body according to one or more embodiments of the present disclosure.
Fig. 5 shows the nozzle assembly further comprises a locking element according to one or more embodiments of the present disclosure.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

In the present disclosure the term "nozzle assembly" denotes an arrangement configured to be handled/held by a user and an arrangement in the form of a drop former or nozzle configured to receive fluid, typically from a conduit fluidly coupled to a fluid source, and dispense a drop of fluid and/or an arrangement configured to be held by fraction collection unit and typically moved to positions over different containers of the fraction collection unit.

In the present disclosure the terms "sensor" and "detector" are used interchangeably and denote an apparatus capable of detecting/sensing/measuring physical properties, e.g. of a fluid. In one example, a detector is a light absorbance apparatus, capable of measuring light absorbance of a fluid.

In the present disclosure the term "fluidly couple" denotes connecting two entities or units such that fluid can flow between the entities or units.

The present disclosure relates to a nozzle assembly which has both small outer diameter at the tip and a small inner diameter. The small outer diameter at the tip has the effect of generating drops of fluid with small volume. The small inner diameter has the effect of maintaining a high purity of the collected sample by ensuring that the desired compound is not diluted by the next separated compound. In other words, the nozzle assembly is provided with a relatively narrow, low internal volume, fluid channel between the conduit adapter/tubing connector and the end of the tip of the nozzle assembly.

This is e.g. the case for a chromatography system collecting compounds or samples with a "narrow peak", i.e. where the duration of an output peak from the detector has a relatively short duration in time. If the internal volume of the nozzle assembly is large, some of the sample/compound collected in a previous container will be dispensed into the current container and thus dilute the desired compound, a phenomenon sometimes denoted as peak-broadening.

The nozzle assembly further comprises two parts, optionally releasably attachable, namely a conduit adapter and a nozzle body. In some embodiments, the two parts are formed as one part having the same features as the two parts.

When the two parts are configured as releasably attachable parts, this has the advantage of allowing the user to separate the task of setting up a system, comprising a fluid source and fraction collection unit, into two steps: one step where the fluid source is connected to the conduit adapter and a second step where the nozzle body is installed into a fraction collection unit of the system. Further, the division of the nozzle assembly into two releasably attachable parts allows replacement of the nozzle body only, e.g. to a nozzle body with a different tip diameter/drop forming size. A further advantage is that the use of normal robust polyetereterketon PEEK tubing is possible instead of conventional systems typically using fragile fused silica tubing in the fraction collection unit.

In one exemplary embodiment the outer diameter of the tip of the nozzle assembly is 0.4 mm and the channel has an inner diameter of 0.3 mm with a total volume of 1 µl. In another exemplary embodiment the outer diameter of the tip of the nozzle assembly is 0.4 mm and the fluid channel is divided into two parts with a first part having an inner diameter of 0.3 mm and a second part having an inner diameter of 0.5mm, with a total volume of 1.6 µl.

The nozzle is typically designed with different nozzle bodies to fit receiving recesses of various fraction collection units.

A brief description of the problem/challenge that is solved by this disclosure follows. To get small drops from the drop former/nozzle, the outer diameter of the tip of the drop former/nozzle needs to be relatively small. In one example with water in room temperature, the drop size in µl is ~15-20x the outer diameter of the tip of the drop former/nozzle in mm. To achieve drops with sizes < 10 µl, the outer diameter of the tip of the drop former/nozzle must be < 0.5 mm. In conventional systems, the drops are typically formed by the tubing end itself, i.e. the conduit/tubing fluidly coupling the fluid source to the fraction collection unit, so the outer diameter of the tubing must be < 0.5 mm. In this dimension, the only readily available tubing is fused silica. It has many disadvantages: it is very fragile, it needs special cutting tools, it has a relatively high price.

As mentioned above, by using the disclosed nozzle assembly with a conduit adapter configured for larger outer diameter conduits/tubing, such as standard PEEK 1/16" (1.59 mm). Such tubing is readily available, and normally used in the fluid sources and fraction collection units

Technical and commercial advantages associated with the novel and unique features of this disclosure include that it is robust and easy to use, the small drop size and low internal volume results in low levels of peak-broadening and it can be produced at a relatively low cost.

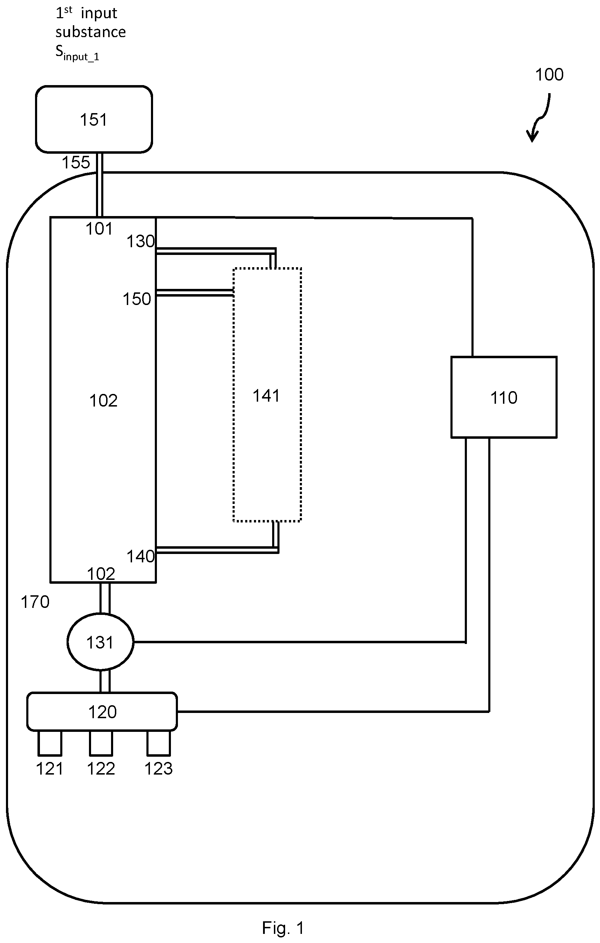

Fig. 1 shows an exemplary application of a fraction collection unit according to one or more embodiments of the present disclosure. In this application the fraction collection unit is used in a bioprocessing system 100, which may may comprise a selection of bioprocessing units, such as a reservoirs 151, a column 141, a detector 131 and the fraction collection unit 120. The bioprocessing system 100 in the form of a chromatography apparatus 100 is described in further detail below.

The chromatography apparatus 100 may typically comprise at least one inlet 155. The inlet may optionally be coupled to one or more reservoirs 151 configured to hold a fluid.

It is understood that the chromatography apparatus 100 may comprise any number of reservoirs and corresponding inlets. The inlet 155 may e.g. be implemented as tubular elements such as a tube or hose. The chromatography apparatus 100 may further comprise a controllable flow path unit (pumps and valves) 102, a column 141 provided with fluid ports 130-150. The column 141 may be comprised in the chromatography apparatus or arranged external to the chromatography apparatus.

The chromatography apparatus 100 may further comprise a control unit 110 which comprises circuitry, e.g. a processor and a memory. The memory may contain instructions executable by the processor, whereby said chromatography apparatus is operative to perform any of the steps or methods described herein. E.g. to direct the fraction collection unit 120 to different containers 121-123.

The chromatography apparatus 100 may further optionally comprise the fraction collection unit 120. The chromatography apparatus 100 is further fluidly coupled to the fraction collection unit 120, thus typically providing samples for discrimination into different containers via the drop former or nozzle assembly disclosed herein.

It is noted that the present disclosure can be used with any application of fraction collection unit 120 and is not limited to chromatography.

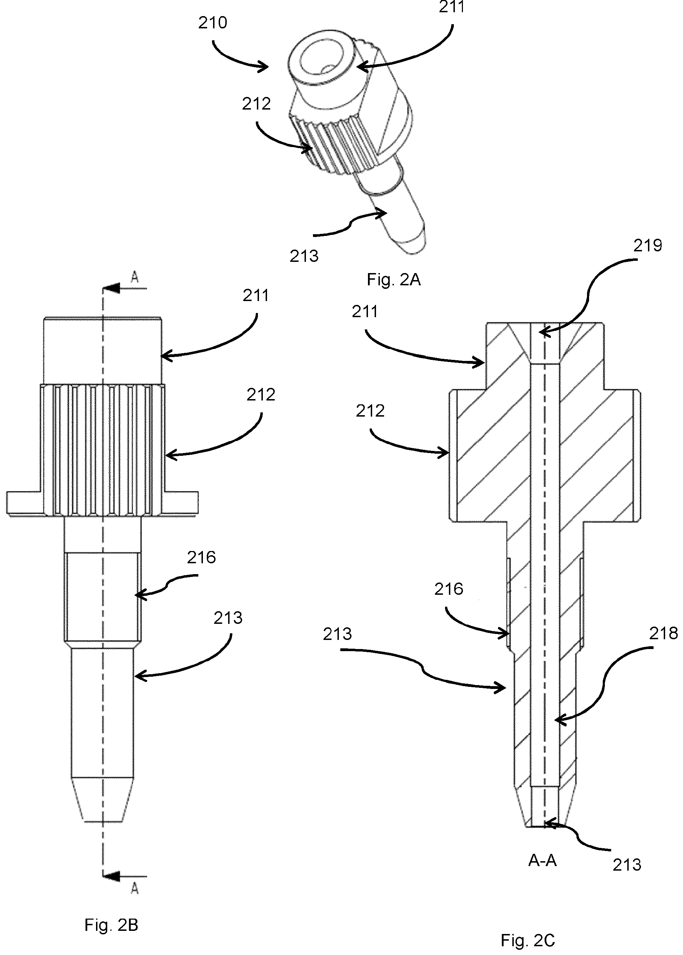

Fig. 2A shows an isometric view of a conduit adapter 210 of the nozzle assembly 200 according to one or more embodiments of the present disclosure. In one embodiment, the conduit adapter 210 comprises a conduit interface part 211 and/or a grip part 212 and/or a body interface part 213.

The conduit interface part 211 is typically configured to mechanically couple to a conduit and also fluidly couple to the conduit, thus allowing fluid to flow from the fluid source to the nozzle assembly. In one example, the conduit interface part 211 is formed with an slightly larger outer diameter than the inner diameter of the conduit, allowing the conduit to be mechanically coupled by friction when threaded over the conduit interface part 211 and simultaneously allowing the conduit to be fluidly coupled when the conduit and an inlet in the conduit interface part 211 form a fluid channel.

In one example, the top of the conduit interface part 211 is shaped like a conduit, with an outer diameter of 7.5 millimeters, an inner diameter of 7.1 millimeters and a height of 4 millimeters.

The grip part 212 is typically configured to provide a safe and secure grip of the conduit adapter 210, when being held by a user. E.g. when the user is threading a conduit from the fluid source onto the conduit interface part 211.

In one example, the grip part 212 is shaped like a ribbed cylinder, with an outer diameter of 10.6 millimeters and a height of 8 millimeters.

The body interface part 213 is typically configured to form a fluid channel and/or to releasably attach to the nozzle body 220 of the nozzle assembly 200. The body interface part 213 may further optionally be provided with an attachment element 216, such as threads, configured to releasably attach to the nozzle body 220 of the nozzle assembly 200.

Fig. 2B shows a front view of the conduit adapter 210 of the nozzle assembly 200 according to one or more embodiments of the present disclosure. A section A-A is indicated by the central axis of the conduit adapter 210.

Fig. 2C shows a section view of the conduit adapter 210 of the nozzle assembly 200 according to one or more embodiments of the present disclosure. The section shown is A-A, as indicated in Fig 2B. As can be seen, a fluid channel 218 is formed from the inlet 219 in the conduit interface part 211 to the tip 213 of the conduit interface part 211. The body interface part 213 is further optionally provided with an attachment element 216, such as threads, configured to releasably attach to the nozzle body 220 of the nozzle assembly 200.

In one example, the body interface part 213 has a total height/length of 18.5 millimeters, the attachment element 216 has a total height/length of 8 millimeters and is provided with UNF 10-32 2A threads. The fluid channel 218 formed from the inlet 219 to the tip 213 has an inner diameter of 1.7 millimeters. The inlet 219 is shaped like a cone having a diameter of 4.5 millimeters at the top and a diameter of 1.7 millimeters where it connects to the fluid channel 218.

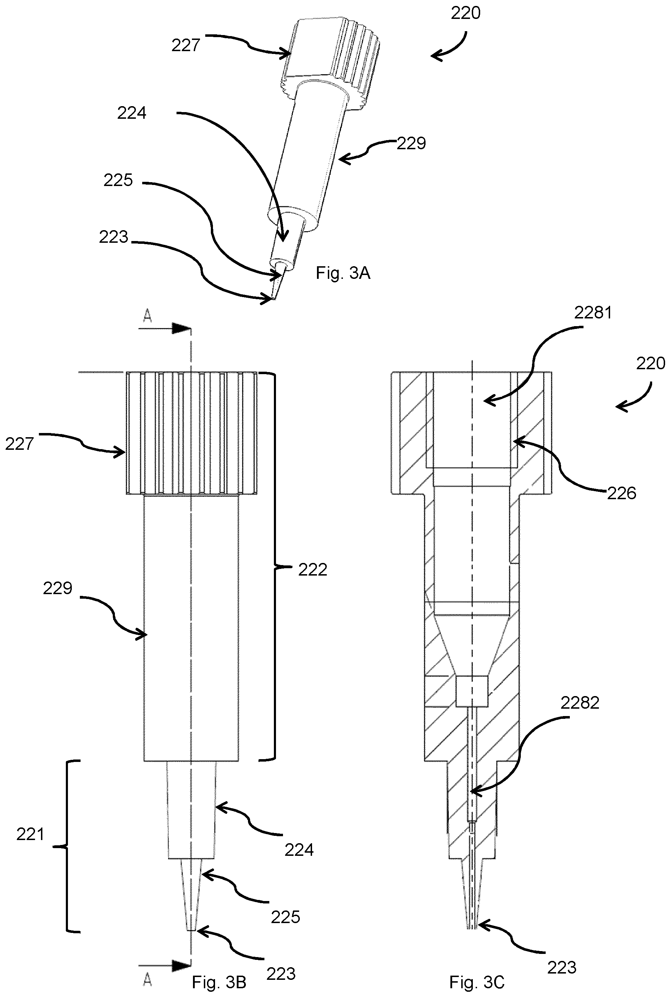

Fig. 3A shows an isometric view of the nozzle body 220 of the nozzle assembly 200 according to one or more embodiments of the present disclosure. In one embodiment, the nozzle assembly 200 comprises a nozzle part 221 and an interface part 222.

In one further embodiment, the nozzle part 221 comprises a selection of any of a tip 223 and/or a cylindrical part 224 and/or a conical part 225.

In one further embodiment, the interface part 222 comprises a selection of any of a grip part 227 and a collector interface part 229. The grip part 227 is typically configured to provide a safe and secure grip of the nozzle body 220, when being held/handled by a user. E.g. when the user is mounting the nozzle body 220 into the fraction collection unit 120. The collector interface part 229 is typically configured to mechanically couple to the fraction collection unit 120. E.g. provided with a shape corresponding to a receiving compartment/recess of the fraction collection unit 120, such as a cylinder having a particular outer diameter.

Fig. 3B shows a front view of the nozzle body 220 of the nozzle assembly 200 according to one or more embodiments of the present disclosure. In one embodiment, the nozzle assembly 200 comprises the nozzle part 221 and the interface part 222. A section A-A is illustrated along the centerline of the nozzle body 220.

Fig. 3C shows a section view of the nozzle body 220 of the nozzle assembly 200 according to one or more embodiments of the present disclosure. The section shown is A-A, as indicated in Fig 3B. In one embodiment, the nozzle body 220 is provided with a cavity or bore 2281 having a corresponding shape to the body interface part 213 of the conduit adapter 210 and a fluid channel 2282 fluidly coupling the cavity to the tip 223 of the nozzle part 221. In one embodiment, the cavity or bore 2281 is further optionally provided with an attachment element 226, such as threads, configured to releasably attach to the conduit adapter 210 of the nozzle assembly 200.

In one example, the total height/length of the nozzle body 220 is 29.4 millimeters. The total height/length of the collector interface part 229 is 14.1 millimeters. The total height/length of the nozzle part 221 is 68.9 millimeters. The total height/length of the grip part 227 is 6.4 millimeters. The inner diameter of the fluid channel 2282 is 0.298 millimeters in a narrow part and 0.5 millimeters in a wider part of the fluid channel.

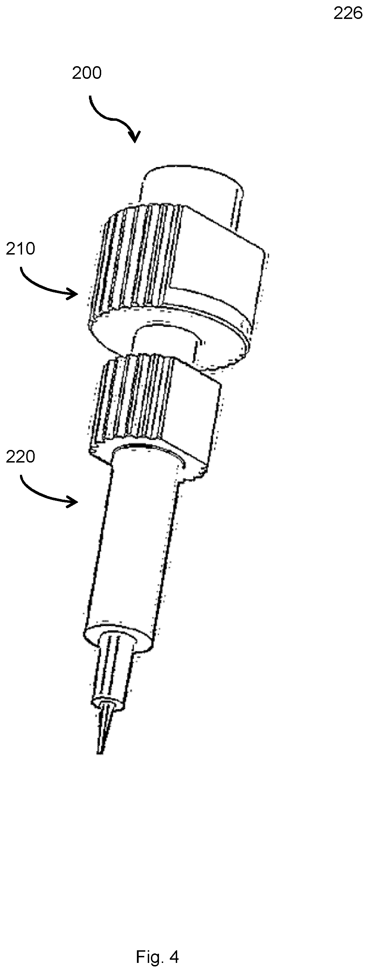

Fig. 4 shows the nozzle assembly 200 when the conduit adapter 210 is attached to the nozzle body 220 according to one or more embodiments of the present disclosure. A fluid channel is then formed from the inlet 219 of the conduit adapter 210 to the tip 223 of the nozzle part 221.

A nozzle assembly 200 is provided for a fraction collection unit 120 configured to collect one or more fluid samples. The nozzle assembly 200 comprises a conduit adapter 210 configured to fluidly couple to a conduit. The conduit adapter 210 is further described in relation to Fig 2A-2C. In this embodiment, the nozzle assembly 200 further comprises a nozzle body 220 optionally configured to be releasably attached to the conduit adapter. The nozzle body 220 is further described in relation to Fig. 3A-3C. In this embodiment, the nozzle body comprises at least a nozzle part 221 configured to release drops of the one or more collected fluid samples at a tip 223 of the nozzle part 221, and an interface part 222 configured to mechanically couple the assembly 200 to the fraction collection unit. To mechanically couple may e.g. comprise the nozzle body at least partially being received by a recess of the fraction collection unit 120. In this embodiment, the assembly, when the conduit adapter 210 is attached to the nozzle body 220, forms a fluid channel from an inlet 219 of the conduit adapter 210 to the tip 223 of the nozzle part 221.

In one example, a user may connect a conduit or tube to the conduit adapter 210 by threading the conduit or tube over a tube-shaped conduit interface part 211. The user may then place the nozzle body 220, or a collector interface part 229 of the nozzle body 220 into a recess of the fraction collection unit 120. The user may then attach the conduit adapter 210 to the nozzle body 220 by inserting the body interface part 213 into the cavity or bore 2281 and engage the attachment elements 216, 226, e.g. by rotating the conduit adapter 210 and engaging matching threads.

In one embodiment, an outer diameter of the tip 223 of the nozzle part 221 is in the range of 0.2-2 millimeters in diameter and more preferably in the range of 0.3-0.5 millimeters in diameter.

In one embodiment, the inner diameter of the tip 223 of the nozzle part 221 is preferably in the range of 0.1-1 millimeters in diameter and more preferably in the range of 0.2-0.4 millimeters in diameter.

In one embodiment, the nozzle part 221 comprises a cylindrical part 224 and a conical part 225 comprising the tip of the nozzle part.

In one embodiment, the interface part 222 further comprises a gripping element 227 configured to provide a secure grip for a user handling the nozzle assembly 200.

In one embodiment, the nozzle body and conduit adapter comprise attachment elements 216, 226 that are used to releasably attach the nozzle body to the conduit adapter. In one example the attachment elements 216, 226 are UNF 10-32 2B threads. In one embodiment, the nozzle assembly 200 is made from plastic.

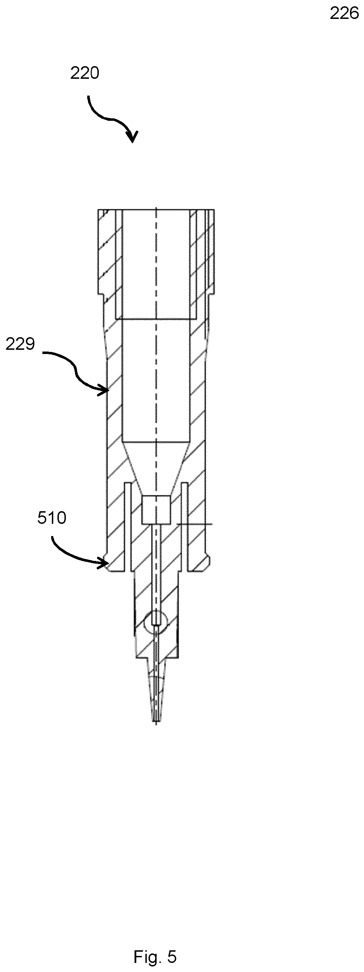

Fig. 5 shows the nozzle assembly 200 further comprises a locking element 510 according to one or more embodiments of the present disclosure. In one embodiment, the interface part 222 further comprises a locking element 510 configured to lock the nozzle assembly to the fraction collection unit 120. In one embodiment, the interface part 222 further comprises a collector interface part 229 configured to be received by a recess of the fraction collection unit 120, wherein the locking element 510 is provided at one end of the collector interface part 229 arranged adjacent to the nozzle part 221. In one embodiment, the locking element 510 is formed like a flap extending from the collector interface part 229 in a direction parallel to a centerline of the nozzle body, wherein the flap is provided with a locking lip at an end of the lip arranged furthest away from the collector interface part 229.

## Claims

1. A nozzle assembly (200) for a fraction collection unit (120) configured to collect one or more fluid samples, said nozzle assembly comprising and being **characterized by**:
a conduit adapter (210) configured to fluidly couple to a conduit, and
a nozzle body (220),
wherein the nozzle body comprises at least:
a nozzle part (221) configured to form and release drops of the one or more collected fluid samples at a tip (223) of the nozzle part (221), and
an interface part (222) configured to mechanically couple the assembly (200) to the fraction collection unit, wherein the assembly, when the conduit adapter (210) is attached to the nozzle body (220), forms a fluid channel from an inlet (219) of the conduit adapter (210) to the tip (223) of the nozzle part (221).

2. The nozzle assembly (200) according to claim 1, wherein an outer diameter of the tip (223) of the nozzle part (221) is in the range of 0.2 to 2 millimeters in diameter and more preferably in the range of 0.3 to 0.5 millimeters in diameter.

3. The nozzle assembly (200) according to any of claims 1 or 2, wherein the inner diameter of the tip (223) of the nozzle part (221) is preferably in the range of 0.1 to 1 millimeters in diameter and more preferably in the range of 0.2 to 0.4 millimeters in diameter.

4. The nozzle assembly (200) according to any of the preceding claims, wherein the nozzle part (221) comprises a cylindrical part (224) and a conical part (225) comprising the tip of the nozzle part.

5. The nozzle assembly (200) according to any of the preceding claims, wherein the interface part (222) further comprises a locking element (510) configured to lock the nozzle assembly to the fraction collection unit.

6. The nozzle assembly (200) according to claim 5, wherein the interface part (222) further comprises a collector interface part (229) configured to be received by a recess of the fraction collection unit (120), wherein the locking element (510) is provided at one end of the collector interface part (229) which is arranged adjacent to the nozzle part (221).

7. The nozzle assembly (200) according to claim 6, wherein the locking element (510) is formed like a flap extending from the collector interface part (229) in a direction parallel to a centerline of the nozzle body, wherein the flap is provided with a locking lip at an end of the lip arranged furthest away from the collector interface part (229).

8. The nozzle assembly (200) according to any of the preceding claims, wherein the interface part (222) further comprises a gripping element (227) configured to provide a secure grip for a user handling the nozzle assembly (200).

9. The nozzle assembly (200) according to any of the preceding claims, wherein the nozzle body and conduit adapter comprises attachment elements (216, 226) that are used to releasably attach the nozzle body to the conduit adapter.

10. The nozzle assembly (200) according to any of the preceding claims, wherein the nozzle assembly (200) is made at least partially from plastic.

11. The nozzle assembly (200) according to any of the preceding claims, wherein at least one component thereof comprises polyetereterketon (PEEK).

12. The nozzle assembly (200) according to any of the preceding claims, having a total internal volume of less than 10 µl, and preferably less than 2 µl.

13. The nozzle assembly (200) according to claim 12, wherein: i) the outer diameter of the tip (223) of the nozzle part (221) is about 0.4 mm and a channel therein has an inner diameter of about 0.3 mm with a total volume of about 1 µl; or ii) the outer diameter of the tip (223) of the nozzle part (221) is about 0.4 mm and a fluid channel therein is divided into two parts with a first part having an inner diameter of about 0.3 mm and a second part having an inner diameter of about 0.5mm, with a total volume of about 1.6 µl.

14. The nozzle assembly (200) according to any of the preceding claims, wherein the nozzle body (220) is configured to be releasably attached to the conduit adapter (210).

## Patentansprüche

1. Düsenanordnung (200) für eine Fraktionssammeleinheit (120), die zum Sammeln einer oder mehrerer Fluidproben konfiguriert ist, wobei die Düsenanordnung umfasst und **gekennzeichnet ist durch**:
einen Leitungsadapter (210), der so konfiguriert ist, dass er fluidisch mit einer Leitung koppelt, und
einen Düsenkörper (220),
wobei der Düsenkörper mindestens Folgendes umfasst:
ein Düsenteil (221), das so konfiguriert ist, dass es Tropfen der einen oder mehreren gesammelten Fluidproben an einer Spitze (223) des Düsenteils (221) bildet und freigibt, und
ein Schnittstellenteil (222), das so konfiguriert ist, dass es die Anordnung (200) mechanisch mit der Fraktionssammeleinheit koppelt, wobei die Anordnung, wenn der Leitungsadapter (210) an dem Düsenkörper (220) angebracht ist, einen Fluidkanal von einem Einlass (219) des Leitungsadapters (210) zu der Spitze (223) des Düsenteils (221) bildet.

2. Düsenanordnung (200) nach Anspruch 1, wobei ein Außendurchmesser der Spitze (223) des Düsenteils (221) im Bereich von 0,2 bis 2 Millimetern im Durchmesser und vorzugsweise im Bereich von 0,3 bis 0,5 Millimetern im Durchmesser liegt.

3. Düsenanordnung (200) nach einem der Ansprüche 1 oder 2, wobei der Innendurchmesser der Spitze (223) des Düsenteils (221) vorzugsweise im Bereich von 0,1 bis 1 Millimeter im Durchmesser und noch bevorzugter im Bereich von 0,2 bis 0,4 Millimeter im Durchmesser liegt.

4. Düsenanordnung (200) nach einem der vorstehenden Ansprüche, wobei das Düsenteil (221) ein zylindrisches Teil (224) und ein konisches Teil (225) umfasst, das die Spitze des Düsenteils umfasst.

5. Düsenanordnung (200) nach einem der vorstehenden Ansprüche, wobei das Schnittstellenteil (222) weiter ein Verriegelungselement (510) umfasst, das so konfiguriert ist, dass es die Düsenanordnung an der Fraktionssammeleinheit verriegelt.

6. Düsenanordnung (200) nach Anspruch 5, wobei das Schnittstellenteil (222) weiter ein Sammelschnittstellenteil (229) umfasst, das so konfiguriert ist, dass es von einer Aussparung der Fraktionssammeleinheit (120) aufgenommen wird, wobei das Verriegelungselement (510) an einem Ende des Sammelschnittstellenteils (229) vorgesehen ist, das angrenzend an das Düsenteil (221) angeordnet ist.

7. Düsenanordnung (200) nach Anspruch 6, wobei das Verriegelungselement (510) wie eine Klappe ausgebildet ist, die sich von dem Sammelschnittstellenteil (229) in einer Richtung parallel zu einer Mittellinie des Düsenkörpers erstreckt, wobei die Klappe mit einer Verriegelungslippe an einem Ende der Lippe versehen ist, das am weitesten von dem Sammelschnittstellenteil (229) entfernt angeordnet ist.

8. Düsenanordnung (200) nach einem der vorstehenden Ansprüche, wobei das Schnittstellenteil (222) weiter ein Griffelement (227) umfasst, das so konfiguriert ist, dass es einem Benutzer, der die Düsenanordnung (200) handhabt, einen sicheren Griff bietet.

9. Düsenanordnung (200) nach einem der vorstehenden Ansprüche, wobei der Düsenkörper und der Leitungsadapter Befestigungselemente (216, 226) umfassen, die zur lösbaren Befestigung des Düsenkörpers an dem Leitungsadapter verwendet werden.

10. Düsenanordnung (200) nach einem der vorstehenden Ansprüche, wobei die Düsenanordnung (200) zumindest teilweise aus Kunststoff hergestellt ist.

11. Düsenanordnung (200) nach einem der vorstehenden Ansprüche, wobei mindestens eine Komponente davon Polyetheretherketon (PEEK) umfasst.

12. Düsenanordnung (200) nach einem der vorstehenden Ansprüche, mit einem inneren Gesamtvolumen von weniger als 10 µL, und vorzugsweise weniger als 2 µL.

13. Düsenanordnung (200) nach Anspruch 12, wobei: i) der Außendurchmesser der Spitze (223) des Düsenteils (221) etwa 0,4 mm beträgt und ein darin befindlicher Kanal einen Innendurchmesser von etwa 0,3 mm hat mit einem Gesamtvolumen von etwa 1 µL; oder ii) der Außendurchmesser der Spitze (223) des Düsenteils (221) etwa 0,4 mm beträgt und ein darin befindlicher Fluidkanal in zwei Teile unterteilt ist, wobei ein erster Teil einen Innendurchmesser von etwa 0,3 mm und ein zweiter Teil einen Innendurchmesser von etwa 0,5 mm aufweist, mit einem Gesamtvolumen von etwa 1,6 µL.

14. Düsenanordnung (200) nach einem der vorstehenden Ansprüche, wobei der Düsenkörper (220) so konfiguriert ist, dass er lösbar an dem Leitungsadapter (210) befestigt werden kann.

## Revendications

1. Ensemble buse (200) pour une unité de collecte de fractions (120) configurée pour collecter un ou plusieurs échantillons de fluide, ledit ensemble buse comprenant et étant **caractérisé par** :
un adaptateur (210) de conduit configuré pour se coupler fluidiquement à un conduit, et
un corps (220) de buse,
dans lequel le corps de buse comprend au moins :
une partie (221) de buse configurée pour former et libérer des gouttelettes des un ou plusieurs échantillons de fluide collectés au niveau d'une pointe (223) de la partie (221) de buse, et
une partie d'interface (222) configurée pour coupler mécaniquement l'ensemble (200) à l'unité de collecte de fractions, dans lequel l'ensemble, lorsque l'adaptateur (210) de conduit est fixé au corps (220) de buse, forme un canal de fluide d'une entrée (219) de l'adaptateur (210) de conduit à la pointe (223) de la partie (221) de buse.

2. Ensemble buse (200) selon la revendication 1, dans lequel un diamètre extérieur de la pointe (223) de la partie (221) de buse est dans la plage de 0,2 à 2 millimètres de diamètre et plus préférentiellement dans la plage de 0,3 à 0,5 millimètre de diamètre.

3. Ensemble buse (200) selon l'une quelconque des revendications 1 ou 2, dans lequel le diamètre intérieur de la pointe (223) de la partie (221) de buse est de préférence dans la plage de 0,1 à 1 millimètre de diamètre et plus préférentiellement dans la plage de 0,2 à 0,4 millimètre de diamètre.

4. Ensemble buse (200) selon l'une quelconque des revendications précédentes, dans lequel la partie (221) de buse comprend une partie cylindrique (224) et une partie conique (225) comprenant l'extrémité de la partie de buse.

5. Ensemble buse (200) selon l'une quelconque des revendications précédentes, dans lequel la partie d'interface (222) comprend en outre un élément de verrouillage (510) configuré pour verrouiller l'ensemble buse à l'unité de collecte de fractions.

6. Ensemble buse (200) selon la revendication 5, dans lequel la partie d'interface (222) comprend en outre une partie d'interface de collecteur (229) configurée pour être reçue par un évidement de l'unité de collecte de fractions (120), dans lequel l'élément de verrouillage (510) est prévu à une extrémité de la partie d'interface de collecteur (229) qui est agencée adjacente à la partie (221) de buse.

7. Ensemble buse (200) selon la revendication 6, dans lequel l'élément de verrouillage (510) est formé comme un volet s'étendant à partir de la partie d'interface de collecteur (229) dans une direction parallèle à une ligne centrale du corps de buse, dans lequel le volet est pourvu d'une lèvre de verrouillage à une extrémité de la lèvre agencée le plus loin de la partie d'interface de collecteur (229).

8. Ensemble buse (200) selon l'une quelconque des revendications précédentes, dans lequel la partie d'interface (222) comprend en outre un élément de préhension (227) configuré pour fournir une préhension ferme pour un utilisateur manipulant l'ensemble buse (200).

9. Ensemble buse (200) selon l'une quelconque des revendications précédentes, dans lequel le corps de buse et l'adaptateur de conduit comprennent des éléments de fixation (216, 226) qui sont utilisés pour fixer de manière détachable le corps de buse à l'adaptateur de conduit.

10. Ensemble buse (200) selon l'une quelconque des revendications précédentes, dans lequel l'ensemble buse (200) est réalisé au moins partiellement en plastique.

11. Ensemble buse (200) selon l'une quelconque des revendications précédentes, dans lequel au moins un de ses composants comprend de la polyétheréthercétone (PEEK).

12. Ensemble buse (200) selon l'une quelconque des revendications précédentes, ayant un volume interne total inférieur à 10 µl, et de préférence inférieur à 2 µl.

13. Ensemble buse (200) selon la revendication 12, dans lequel : i) le diamètre extérieur de la pointe (223) de la partie (221) de buse est d'environ 0,4 mm et un canal dans celle-ci a un diamètre intérieur d'environ 0,3 mm avec un volume total d'environ 1 µl ; ou ii) le diamètre extérieur de la pointe (223) de la partie (221) de buse est d'environ 0,4 mm et un canal de fluide dans celle-ci est divisé en deux parties avec une première partie ayant un diamètre intérieur d'environ 0,3 mm et une deuxième partie ayant un diamètre intérieur d'environ 0,5 mm, avec un volume total d'environ 1,6 µl.

14. Ensemble buse (200) selon l'une quelconque des revendications précédentes, dans lequel le corps (220) de buse est configuré pour être fixé de manière détachable à l'adaptateur (210) de conduit.
